# FASCICULE DE BREVET EUROPEEN

(11) **EP 3 561 276 B1**
(45) Date de publication et mention de la délivrance du brevet: **17.03.2021**
(21) Numéro de dépôt: 19170741.3
(22) Date de dépôt: 24.04.2019
(51) Int. Cl.: F02K 1/64, F02K 1/76

(54) **INVERSEUR DE POUSSÉE AVEC SYSTÈME D'OUVERTURE ET DE FERMETURE OPTIMISÉ**
SCHUBUMKEHRSYSTEM MIT OPTIMIERTEM ÖFFUNGS- UND SCHLIESSSYSTEM
THRUST INVERTER WITH OPTIMISED OPENING AND CLOSING SYSTEM

(30) Priorité: 25.04.2018 FR 1853621
(43) Date de publication de la demande: 30.10.2019
(73) Titulaire: Safran Nacelles, 76700 Gonfreville-l'Orcher (FR)
(72) Inventeur: CARUEL, Pierre, 76700 GONFREVILLE L'ORCHER (FR); GIARD, Régis, 76700 GONFREVILLE L'ORCHER (FR); GUILLOIS, Denis, 76700 GONFREVILLE L'ORCHER (FR); VANCON, Philippe, 76700 GONFREVILLE L'ORCHER (FR)
(74) Mandataire: Chevalier, Renaud Philippe

(56) Documents cités:
- EP-A1- 2 383 456
- FR-A1- 2 502 227
- US-A1- 2015 308 374

## Description

La présente invention concerne un inverseur de poussée, et une nacelle d'ensemble propulsif d'aéronef équipée de cet inverseur de poussée.

Afin de raccourcir la distance de freinage d'un aeronef équipé de turboréacteurs chacun entouré par une nacelle assurant un guidage d'un flux de gaz généré par le turboréacteur, il est connu d'équiper l'aeronef d'un inverseur de poussée.

L'inverseur de poussée comprend des éléments mobiles d'inversion de poussée, généralement deux éléments mobiles d'inversion de poussée, portés par la nacelle pour se déplacer entre une position rétractée dans laquelle l'inverseur de poussée est inactif, et une position déployée dans laquelle l'inverseur de poussée est actif, c'est-à-dire qu'il renvoie vers l'avant au moins une partie du flux de gaz généré par le turboréacteur.

Dans un type d'inverseur de poussée, les éléments mobiles d'inversion sont des portes.

Dans les inverseurs de poussée à portes existants, la position des éléments mobiles d'inversion est commandée par des vérins double effet. Un vérin double effet comprend deux chambres pouvant être mises en communication avec un fluide, indépendamment l'une de l'autre, afin d'exercer une force dans un sens ou dans l'autre. Les dimensions des vérins sont déterminées par la force qu'il est nécessaire d'appliquer aux éléments mobiles lors de la rétraction au cours de laquelle les éléments mobiles sont déplacés à l'encontre de la force appliquée par les gaz générés par le turboréacteur, et à l'encontre de la force aérodynamique résultant du déplacement de l'aeronef. La force nécessaire au déploiement est ainsi très différente de la force nécessaire à la fermeture.

Dans le sens du déploiement, c'est-à-dire lors du passage de la position rétractée à la position déployée, les vérins sont donc largement surdimensionnés Le document US 2015/308374 divulgue un inverseur de poussée faisant partie de l'état de l'art.

Un but de l'invention est de proposer un inverseur de poussée dont les diamètres et cylindrées sont optimisées.

A cet effet, l'invention concerne un inverseur de poussée pour nacelle d'ensemble propulsif d'aéronef comportant au moins un élément d'inversion de poussée mobile entre une position rétractée dans laquelle l'inverseur de poussée est inactif, et une position déployée dans laquelle l'inverseur de poussée est actif. L'au moins un élément d'inversion de poussée est de préférence une porte. L'inverseur comporte des moyens d'actionnement dudit au moins un élément d'inversion de poussée. Selon l'invention, les moyens d'actionnement comprennent au moins un vérin de déploiement dudit au moins un élément d'inversion de poussée, et au moins un vérin à simple effet de rétraction dudit au moins un élément d'inversion de poussée.

On entend par l'expression « vérin à simple effet » un vérin comprenant une unique chambre pouvant être mise en communication avec un fluide afin d'exercer une force dans un seul sens, par distinction avec un vérin à double effet.

Ainsi, chaque vérin peut être dimensionné de façon précise en fonction de la force à laquelle l'élément mobile associé est soumis.

Selon une version avantageuse de l'invention, ledit au moins un vérin de déploiement peut être un vérin à simple effet. Ainsi, le vérin de déploiement et le vérin de rétraction peuvent être configurés indépendamment l'un de l'autre.

En particulier, ledit au moins un vérin à simple effet de déploiement peut avoir des dimensions inférieures audit au moins un vérin à simple effet de rétraction.

Selon un autre aspect avantageux de l'invention, l'inverseur de poussée peut comporter deux éléments d'inversion de poussée, un unique vérin de déploiement des deux éléments d'inversion de poussée, et un unique vérin de rétraction des deux éléments d'inversion de poussée.

Selon encore d'autres aspects de l'invention qui peuvent être pris isolément ou en combinaison : le vérin de déploiement et le vérin de rétraction peuvent être diamétralement opposés par rapport à un axe principal de la nacelle ; l'inverseur de poussée peut comporter au moins un verrou actif associé au vérin à simple effet de rétraction ; ledit au moins un verrou actif peut être associé au vérin à simple effet de rétraction ; ledit au moins un verrou actif peut être disposé sur un côté opposé au vérin à simple effet auquel il est associé.

Dans le présent document, on entend par l'expression « verrou actif » un verrou capable d'appliquer en fin de course un effort de fermeture sur la partie mobile de l'inverseur de poussée et capable de réaliser le maintien en position fermée.

L'invention concerne également une nacelle d'ensemble propulsif d'aéronef comportant un inverseur de poussée selon l'invention.

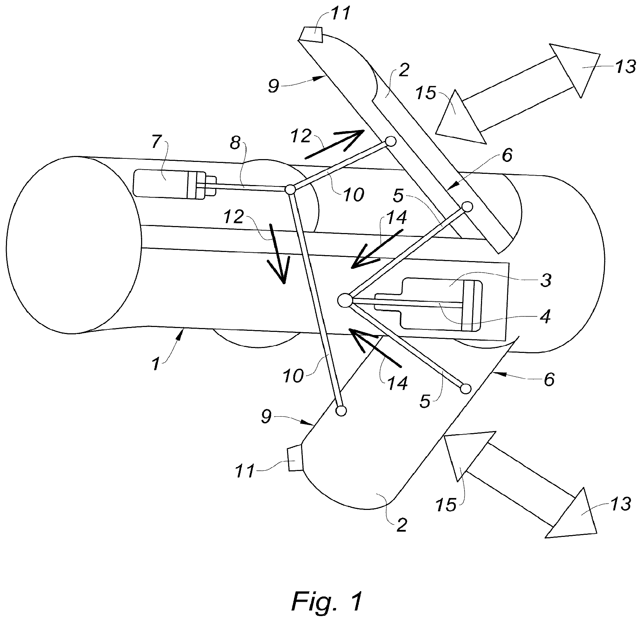

D'autres caractéristiques et avantages de l'invention apparaîtront encore à la lecture de la description qui suit d'un mode de réalisation préféré non limitatif d'une nacelle équipée d'un inverseur de poussée selon l'invention, en référence à la figure 1 unique ci-jointe qui est une représentation schématique fonctionnelle de l'invention.

En référence à la figure, la nacelle 1 est équipée d'un inverseur de poussée comportant de façon connue en soi deux éléments d'inversion de poussée, ici deux portes 2 montées pour pivoter sur des axes non représentés s'étendant perpendiculairement à l'axe longitudinal de la nacelle. De façon également connue en soi, les portes 2 sont montées de façon diamétralement opposées.

Selon le mode de réalisation préféré de l'invention, l'inverseur de poussée comporte un vérin simple effet unique de rétraction 3 fixé sur un côté de la nacelle et dont la tige 4 s'étend parallèlement à l'axe longitudinal de la nacelle. La tige 4 est reliée à un côté 6 des portes 2 par des biellettes 5.

L'inverseur de poussée comporte en outre un vérin simple effet unique de déploiement 7 fixé sur un côté de la nacelle diamétralement opposé au côté de fixation 6 du vérin de rétraction 3, relativement à un axe le long duquel s'étend la nacelle 1. Le vérin de déploiement 7 comporte une tige 8 qui s'étend parallèlement à l'axe longitudinal de la nacelle. La tige 8 est reliée à un côté 9 des portes 2 opposé au côté 6 par des biellettes 10. Pour une meilleure illustration des liaisons, le vérin 7 et les biellettes 10 ont été représentés de façon visible sur la figure alors que physiquement ils sont disposés sur un côté de la nacelle opposé au vérin de rétraction 3.

Le vérin de déploiement 7 a des dimensions inférieures aux dimensions du vérin de rétraction 3 dans la proportion des forces auxquelles les portes 2 sont soumises lors du déploiement ou de la rétraction.

Dans le mode de réalisation préféré illustré, chaque porte 2 est équipée d'un verrou actif 11 associé au vérin de rétraction 3. De façon connue en soi, on entend par verrou actif un verrou pouvant s'ouvrir sous charge et adapté à s'enclencher en fin de course de rétraction en compensant les déformations de la porte résultant des charges aérodynmiques lors de la rétraction. Dans le mode de réalisation illustré, les verrous actifs sont montés sur le côté 9 des portes, opposé au vérin de rétraction 3.

Lors de la mise en service de l'inverseur de poussée, le vérin de déploiement 7 est alimenté en liquide hydraulique tandis que le vérin de rétraction 3 est relié à un réservoir de retour non représenté, ce qui provoque l'extension de la tige 8 et donc la transmission aux portes 2 d'une force de déploiement comme illustré par les flèches 12 et 13 sur la figure. Simultanément les biellettes 5 provoquent le retrait de la tige 4 du vérin de rétraction 3.

Lors de la mise en position inactive de l'inverseur de poussée, le vérin de rétraction 3 est alimenté en fluide hydraulique, tandis que le vérin de déploiement 7 est relié à un circuit de retour non représenté, ce qui provoque l'extension de la tige 4 et donc la transmission aux portes 2 d'une force de rétraction comme illustré par les flèches 14 et 15 sur la figure. Simultanément les biellettes 10 provoquent le retrait de la tige 8 du vérin de déploiement 7. En fin de course les verrous actifs 11 assurent un verrouillage des portes 2, ce qui permet d'annuler ou de limiter toute dissymétrie de déformation des portes induite par la configuration dissymétrique du vérin.

Bien entendu, l'invention n'est pas limitée au mode de réalisation décrit et est susceptible de variantes de réalisation sans sortir du cadre de l'invention telle que définie par les revendications.

En particulier, bien que le dispositif selon l'invention ait été illustré en relation avec un inverseur de poussée comprenant deux éléments d'inversion de poussée, un unique vérin de déploiement des deux éléments d'inversion de poussée, et un unique vérin de rétraction des deux éléments d'inversion de poussée, on peut prévoir un nombre différent d'éléments mobiles et de vérins de manœuvre.

Bien que l'invention ait été décrite en relation avec un inverseur de poussée comportant uniquement des vérins simple effet, on peut réaliser la fonction de déploiement avec un vérin à double effet, la fonction de rétraction étant alors réalisée par une combinaison du vérin à double effet pris dans le sens de la rétraction, et d'un vérin à simple effet dans un sens de rétraction.

Bien que l'invention ait été illustrée en relation avec un inverseur de poussée comportant des éléments mobiles en forme de portes pivotantes, on peut réaliser l'invention avec un inverseur de poussée comportant, de façon connue en soi, des grilles associées à un capot mobile en translation.

## Revendications

1. Inverseur de poussée pour nacelle d'ensemble propulsif d'aéronef comportant au moins un élément d'inversion de poussée (2) mobile entre une position rétractée dans laquelle l'inverseur de poussée est inactif et une position déployée dans laquelle l'inverseur de poussée est actif, l'inverseur de poussée comportant des moyens d'actionnement dudit au moins un élément d'inversion de poussée (2), **caractérisé en ce que** les moyens d'actionnement comprennent au moins un vérin de déploiement (7) dudit au moins un élément d'inversion de poussée, et au moins un vérin à simple effet de rétraction (3) dudit au moins un élément d'inversion de poussée.

2. Inverseur de poussée selon la revendication 1, dans lequel ledit au moins un vérin de déploiement (7) est un vérin à simple effet.

3. Inverseur de poussée selon la revendication 2, dans lequel ledit au moins un vérin à simple effet de déploiement (7) a des dimensions inférieures audit au moins un vérin à simple effet de rétraction (3).

4. Inverseur de poussée selon l'une quelconque des revendications précédentes, comportant deux éléments d'inversion de poussée (2), un unique vérin de déploiement (7) des deux éléments d'inversion de poussée, et un unique vérin de rétraction (3) des deux éléments d'inversion de poussée.

5. Inverseur de poussée selon l'une quelconque des revendications précédentes, dans lequel le vérin de déploiement (7) et le vérin de rétraction (3) sont diamétralement opposés.

6. Inverseur de poussée selon l'une quelconque des revendications précédentes, comportant au moins un verrou actif (11) associé à un vérin à simple effet.

7. Inverseur de poussée selon la revendication 6, dans lequel ledit au moins un verrou actif (11) est associé au vérin à simple effet de rétraction.

8. Inverseur de poussée selon la revendication 7, dans lequel ledit au moins un verrou actif (11) est disposé sur un côté opposé au vérin à simple effet (3) auquel il est associé.

9. Nacelle d'ensemble propulsif d'aéronef, **caractérisée en ce qu'**elle comporte un inverseur de poussée selon l'une quelconque des revendications 1 à 8.

## Patentansprüche

1. Schubumkehr für eine Gondel einer Antriebsbaugruppe eines Luftfahrzeugs, welche mindestens ein Schubumkehrelement (2) beinhaltet, das zwischen einer eingezogenen Position, in der die Schubumkehr inaktiv ist, und einer ausgebreiteten Position, in der die Schubumkehr aktiv ist, beweglich ist, wobei die Schubumkehr Betätigungsmittel des mindestens einen Schubumkehrelements (2) beinhaltet, **dadurch gekennzeichnet, dass** die Betätigungsmittel mindestens einen Ausbreitungszylinder (7) des mindestens einen Schubumkehrelements umfassen, und mindestens einen einfach wirkenden Einzugszylinder (3) des mindestens einen Schubumkehrelements.

2. Schubumkehr nach Anspruch 1, wobei der mindestens eine Ausbreitungszylinder (7) ein einfach wirkender Zylinder ist.

3. Schubumkehr nach Anspruch 2, wobei der mindestens eine einfach wirkende Ausbreitungszylinder (7) Abmessungen aufweist, die kleiner als mindestens ein einfach wirkender Einzugszylinder (3) sind.

4. Schubumkehr nach einem der vorstehenden Ansprüche, welche zwei Schubumkehrelemente (2), einen einzigen Ausbreitungszylinder (7) der beiden Schubumkehrelemente, und einen einzigen Einzugszylinder (3) der beiden Schubumkehrelemente beinhaltet.

5. Schubumkehr nach einem der vorstehenden Ansprüche, wobei der Ausbreitungszylinder (7) und der Einzugszylinder (3) diametral gegenüberliegend sind.

6. Schubumkehr nach einem der vorstehenden Ansprüche, welche mindestens einen aktiven Riegel (11) beinhaltet, der einem einfach wirkenden Zylinder zugewiesen ist.

7. Schubumkehr nach Anspruch 6, wobei der mindestens eine aktive Riegel (11) einem einfach wirkenden Einzugszylinder zugewiesen ist.

8. Schubumkehr nach Anspruch 7, wobei der mindestens eine aktive Riegel (11) auf einer Seite, die gegenüber dem einfach wirkenden Zylinder (3), dem er zugewiesen ist, angeordnet ist.

9. Gondel einer Antriebsbaugruppe eines Luftfahrzeugs, **dadurch gekennzeichnet, dass** sie eine Schubumkehr nach einem der Ansprüche 1 bis 8 beinhaltet.

## Claims

1. A thrust reverser for an aircraft propulsion unit nacelle comprising at least one thrust reverser element (2) which is movable between a retracted position in which the thrust reverser is inactive and a deployed position in which the thrust reverser is active, the thrust reverser comprising means for actuating said at least one thrust reverser element (2), **characterized in that** the actuating means comprise at least one deployment cylinder (7) of said at least one thrust reverser element, and at least one single-acting retraction cylinder (3) of said at least one thrust reverser element.

2. The thrust reverser according to claim 1, wherein said at least one deployment cylinder (7) is a single-acting cylinder.

3. The thrust reverser according to claim 2, wherein said at least one single-acting deployment cylinder (7) has dimensions which are smaller than said at least one single-acting retraction cylinder (3).

4. The thrust reverser according to any one of the preceding claims, comprising two thrust reverser elements (2), a single deployment cylinder (7) of the two thrust reverser elements, and a single retraction cylinder (3) of the two thrust reverser elements.

5. The thrust reverser according to any one of the preceding claims, wherein the deployment cylinder (7) and the retraction cylinder (3) are diametrically opposed.

6. The thrust reverser according to any one of the preceding claims, including at least one active lock (11) associated with a single-acting cylinder.

7. The thrust reverser according to claim 6, wherein said at least one active lock (11) is associated with the single-acting retraction cylinder.

8. The thrust reverser according to claim 7, wherein said at least one active lock (11) is disposed on a side opposite to the single-acting cylinder (3) with which it is associated.

9. An aircraft propulsion unit nacelle, **characterized in that** it includes a thrust reverser according to any one of claims 1 to 8.
